# EUROPÄISCHE PATENTSCHRIFT

(11) **EP 0 424 893 B1**
(45) Veröffentlichungstag und Bekanntmachung des Hinweises auf die Patenterteilung: **20.07.1994**
(21) Anmeldenummer: 90120345.5
(22) Anmeldetag: 23.10.1990
(51) Int. Cl.: B01D 53/34

(54) **Verfahren zum Einbringen eines Behandlungsmediums in den Abgasstrom bei Verbrennungsprozessen**
Method of supplying a treating agent into an exhaust gas stream of combustion processes
Méthode pour alimenter un moyen de traitement dans des gaz d'échappement des procédés de combustion

(30) Priorität: 24.10.1989 DE 3935400
(43) Veröffentlichungstag der Anmeldung: 02.05.1991
(73) Patentinhaber: MARTIN GmbH für Umwelt- und Energietechnik, D-80807 München (DE)
(72) Erfinder: Martin, Johannes Josef Edmund, W-8124 Seeshaupt (DE)
(74) Vertreter: Zmyj, Erwin, Dipl.-Ing., Dipl.-Wirtsch.-Ing.

(56) Entgegenhaltungen:
- DE-C- 3 722 523
- US-A- 4 115 515

## Beschreibung

Die Erfindung bezieht sich auf ein Verfahren zum Einbringen eines Behandlungsmediums in Form von Chemikalien in den Abgasstrom bei Verbrennungsprozessen mittels eines Trägermediums durch eine Zerstäubungsdüse zur Verminderung der Stickoxid-Konzentration, wobei das Einbringen in den Feuerraum in mindestens zwei übereinanderliegenden Ebenen erfolgt, in denen Zerstäubungsdüsen angeordnet sind, die wahlweise abwechselnd oder gemeinsam mit dem Behandlungsmedium beaufschlagt werden.

Die eingeführten Chemikalien zur Verminderung des Stickoxidgehaltes in den Abgasen sind in der Regel Ammoniak, Salmiak, Harnstoff oder Kalkstickstoff, die unter Umständen mit verschiedenen Kohlenwasserstoffverbindungen als sogenannten Verstärkerchemikalien vermischt werden können. Die zwischen diesen Chemikalien und Stickoxiden im Rauchgasstrom ablaufenden Reaktionen sind Reduktionsreaktionen, bei denen das im Rauchgas vorliegende Stickstoffmonoxid zu reinem Stickstoff reduziert wird. Diese Reaktionen benötigen für einen optimalen und schnellen Reaktionsablauf relativ hohe Umgebungstemperaturen. Diese Temperaturen liegen je nach Chemikalien bzw. je nach Chemikaliengemisch zwischen 750°C und 1.100°C. Generell gilt für diese Chemikalien innerhalb bestimmter Grenzen, daß höhere Temperaturen auch wirkungsvollere Reaktionsbedingungen sicherstellen. Aus diesem Grunde erfolgt bei dem bekannten Verfahren gemäß der US-A-4,115,515 das Einbringen der Behandlungsmedien in mehreren Ebenen mittels Düsen, wobei die einzelnen Ebenen entsprechend den jeweils günstigsten Temperaturbedingungen mit dem Behandlungsmedium beaufschlagt werden. Hierfür dienen beispielsweise Thermoelemente, die die Temperaturverteilung feststellen und automatisch eine Umschaltung zwischen den einzelnen Düsenebenen bewirken.

Trotz dieses Aufwandes ist ein befriedigender Verfahrensablauf nicht immer festgestellt worden. Es sind sogar Erhöhungen des Gesamtniveaus der Stickoxide im Rauchgas festgestellt worden, was auf eine Zerstörung durch Verbrennung der eingeführten Chemikalien zurückzuführen ist, wenn diese Stickstoff enthalten.

Aufgabe der Erfindung ist es, ein Verfahren bereitzustellen, bei dem eine sichere Reduzierung der Stickoxidkonzentration im Rauchgas gewährleistet ist.

Diese Aufgabe wird erfindungsgemäß ausgehend von dem eingangs erwähnten Verfahren dadurch gelöst, daß bei Vorhandensein der Flamme in einer oder mehreren Düsenebenen, diese Düsenebene vollständig von der Zufuhr von Behandlungsmedien abgeschaltet wird, sodaß das Umschalten von einer Düsenebene auf die nächste Düsenebene in Abhängigkeit vom Vorhandensein einer Flamme im Bereich der jeweiligen Düsenebene erfolgt.

Diesem Lösungsvorschlag liegt die Erkenntnis zugrunde, daß die eingeführten Chemikalien immer dann zerstört werden, wenn sie mit einer Flamme in Berührung kommen. Die vorliegende Erfindung stellt demnach den Regelungsprozeß nicht mehr, wie bisher, auf ein bestimmtes Temperaturprofil, sondern einzig und allein auf das Vorhandensein einer Flamme bzw. auf das Fehlen einer Flamme ab.

In Verbindung mit einer feinfühligen Überwachung der Flamme im Verbrennungsraum mittels Flammendetektoren, insbesondere optischen Pyrometern, Thermographiekameras, Videokameras, Fotozellen usw., kann unabhängig von der Höhe der jeweiligen Flammenfront innerhalb des Verbrennungsraumes jeweils diejenige Menge an Behandlungsmedium eingedüst werden, die zur Einstellung eines gewünschten Stickoxidgehaltes im Rauchgas notwendig ist. Die erwähnten Flammendetektoren arbeiten sehr schnell, so daß sehr rasch von einer Düsenebene auf die nächste Düsenebene umgeschaltet werden kann, wodurch eine Zerstörung aufgrund chemischer Aufspaltung der eingebrachten Chemikalien vermieden wird.

Die Erfindung wird nachfolgend anhand der Zeichnungen näher erläutert. In dieser zeigen:
- Fig. 1:: eine schematische Darstellung der Einrichtung zur Einbringung des Behandlungsmediums; und
- Fig. 2 :: eine schematische Darstellung des Verfahrensfließbildes in Verbindung mit einem Regelsystem.

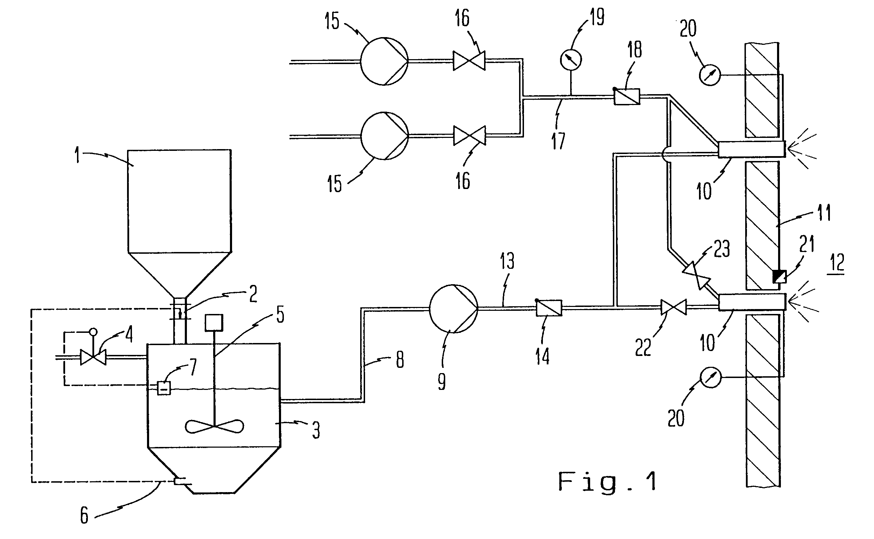

Aus Fig. 1 ist das schematische Fließbild für das Trägermedium und das Behandlungsmedium ersichtlich. Danach ist mit 1 ein Vorratsbehälter für die in den Feuerraum einzubringende Chemikalie bezeichnet, welche sich in diesem Behälter beispielsweise in pulvrigem Zustand befindet. Über eine Schleuse 2 gelangt die Chemikalie in einen Vorlagebehälter 3, in welchem über ein Ventil 4 Wasser zur Auflösung der Chemikalie eingeführt wird. Mittels eines Rührers 5 wird die angesetzte Lösung bzw. Suspension ständig in Umwälzbewegung gehalten, um eine Entmischung zu verhindern. Mit 6 ist ein Niveauüberwachungssystem bezeichnet, welches für die Zufuhr von Chemikalien aus dem Vorratsbehälter 1 bei Unterschreitung des Minimalstandes sorgt. Ein Schwimmer 7 überwacht den Flüssigkeitsstand im Vorlagebehälter 3 und beeinflußt das Ventil 4 zur Zuführung von Wasser in den Vorlagebehälter 3. Über eine Leitung 8 wird mittels einer Pumpe 9 das Behandlungsmedium mehreren Zerstäubungsdüsen 10 zugeführt, die in der Wand 11 eines Feuerraumes 12 in mehreren Ebenen verteilt angeordnet sind. In der Druckleitung 13, die von der Pumpe 9 zu den Zerstäubungsdüsen 10 führt, ist ein Rückschlagventil 14 vorgesehen, um das Zurückströmen von Trägermedium in den Vorlagebehälter 3 zu vermeiden. Das Trägermedium, das in dem vorliegenden Beispiel Wasser ist, wird mittels Pumpen 15 über Ventile 16 einer Druckleitung 17 zugeführt, die zu den Zerstäubungsdüsen 10 führt. Innerhalb der Druckleitung ist ein Rückschlagventil 18 und eine Druckmeßstelle 19 vorgesehen. Eine weitere Druckmeßstelle 20 überwacht den Druck in den Zerstäubungsdüsen 10. In der Nähe der Zerstäubungsdüsen 10 der unteren Düsenreihe ist ein Flammendetektor 21 vorgesehen, der bei Vorhandensein einer Flamme im Bereich der unteren Zerstäubungsdüse 10 ein Ventil 22 in der Druckzuführungsleitung 13 für das Behandlungsmedium über ein in dieser Figur nicht gezeigtes Regelsystem absperrt. Falls erwünscht kann mittels eines Ventiles 23 auch das Trägermedium zu der Zerstäubungsdüse 10 abgesperrt bzw. gedrosselt werden, wenn dies die Betriebsverhältnisse im Feuerraum zulassen. Eine gewisse Zuführung von Trägermedium kann durchaus erwünscht sein, auch wenn das Behandlungsmedium abgesperrt wird, um eine Kühlung der Zerstäubungsdüse zu bewirken.

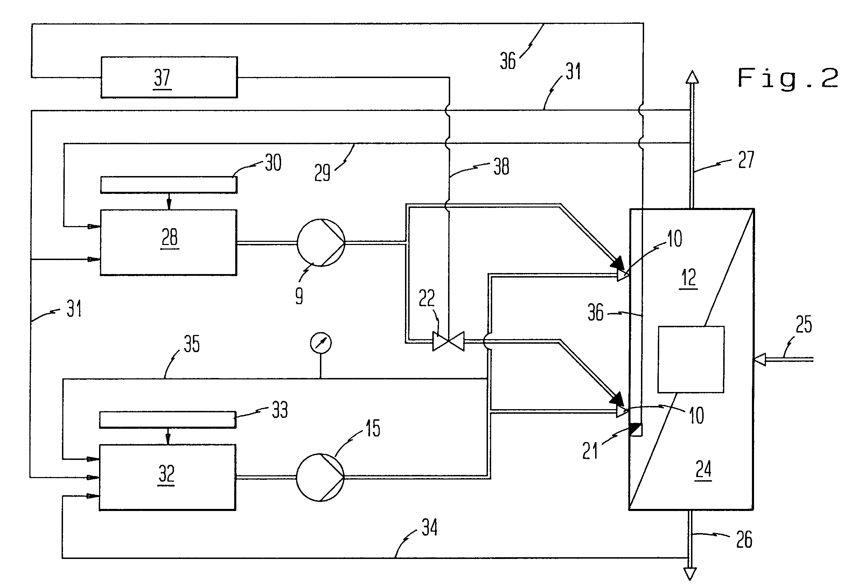

Anhand von Fig. 2 wird nun das Regelsystem erläutert, mit dessen Hilfe die Einbringung des Behandlungsmediums generell und obendrein in Abhängigkeit von der Flammenausbildung im Feuerraum geregelt wird. Soweit es sich um Teile handelt, die bereits in Fig. 1 beschrieben sind, werden die gleichen Bezugszeichen verwendet. Mittels der Pumpen 9 und 15 wird Behandlungsmedium und Trägermedium zu den Zerstäubungsdüsen 10 geführt, die in den Feuerraum 12 einmünden. Mit 24 ist der Kessel insgesamt bezeichnet, dem über eine Leitung 25 Speisewasser zugeführt wird. Mit 26 ist die Dampfentnahmeleitung bezeichnet, während das Bezugszeichen 27 den Rauchgasabzug symbolisiert.

Mittels eines Regelsystems 28 wird die Fördermenge des Behandlungsmediums, d. h. der Chemikalie eingestellt, die zur Einbringung in den Feuerraum 12 vorgesehen ist. Die Regelung erfolgt in Abhängigkeit von der NOₓ-Konzentration im Rauchgas des Rauchgasabzuges 27, wobei die Messung dieser Gaskonzentration an einer Stelle vorgenommen wird, in der sich bereits behandeltes, d. h. mit dem Behandlungsmedium versetztes Rauchgas befindet. Dieses Signal wird über die Leitung 29 dem Regelsystem 28 zugeführt. Mittels eines Sollwertgebers 30 wird derjenige Sollwert des NOₓ-Gehaltes wird derjenige Wert eingestellt, bei dessen Überschreitung die Zufuhr von Behandlungsmedium in den Feuerraum zur Behandlung des Rauchgases einsetzt. Die Regelung der Zuführung des Behandlungsmediums erfolgt also in Abhängigkeit von der Differenz zwischen dem über die Leitung 29 zugeführten tatsächlichen NOₓ-Gehaltes und dem durch den Sollwertgeber 30 vorgegebenen Wert. Weiterhin kann das Regelsystem 28 die zugeführte Menge an Behandlungsmedium oder zusätzlich in Abhängigkeit vom Rauchgas-Volumenstrom regeln, wobei dieser Wert im Rauchgasabzug 27 gemessen und das entsprechende Signal durch die Leitung 31 dem Regelsystem 28 zugeführt wird.

Dieser, den Volumenstrom des Rauchgases betreffende Meßwert wird über die Leitung 31 auch einem weiterem Regelsystem 32 zugeleitet, welches zur Einstellung des Zerstäubungsdruckes vorgesehen ist. Ein Sollwertgeber 33 für den Zerstäubungsdruck gibt einen auf die Düsenkonfiguration abgestimmten Festwert vor oder der Zerstäubungsdruck kann in Abhängigkeit vom Rauchgasvolumenstrom oder von der Dampfkessel-Last eingestellt werden. Der Meßwert, der den Rauchgasvolumenstrom betrifft, wird über die Leitung 31 zugeführt, während der Meßwert betreffend die Dampfkessellast über die Leitung 34 zugeführt wird. Mit 35 ist eine Signalleitung bezeichnet, die den tatsächlich herrschenden Zerstäubungsdruck dem Regelsystem 32 zuführt.

Unterhalb der unteren, feuerungsnäheren Zerstäubungsdüse 10 ist ein Flammendetektor 21 vorgesehen, der bei Auftreten einer Flamme in diesem Bereich ein Signal über eine Leitung 36 zu einem Regelsystem 37 leitet, welches über eine Steuerleitung 38 einen entsprechenden Steuerbefehl an das Ventil 22 weitergibt, welches die Zufuhr von Behandlungsmedium zur Zerstäubungsdüse der unteren Düsenebene überwacht.

Wenn durch den Detektor 21 keine Flamme festgestellt wird, so wird sowohl Trägermedium als auch Behandlungsmedium mittels der Pumpen 15 bzw. 9 den Zerstäubungsdüsen in allen Ebenen zugeführt, wobei die Menge des zugeführten Behandlungsmediums mittels des Regelsystems 28 in Abhängigkeit von dem NOₓ-Gehalt oder in Abhängigkeit vom Abgasvolumenstrom eingestellt wird. Sobald der Detektor 21 eine Flamme im Bereich der unteren Düsenebene feststellt, wird zur Vermeidung einer Zersetzung der eingeführten Chemikalie das Ventil 22 geschlossen und nur noch die obere Reihe der Zerstäubungsdüsen 10 mit Behandlungsmedium beaufschlagt, wobei nach Ausfall der unteren Reihe der oberen Düsenreihe mehr Behandlungsmedium zugeführt wird, sofern sich an der bisherigen Rauchgaskonzentration nichts geändert hat. Im übrigen werden diese Düsen der oberen Reihe entsprechend dem Bedarf an Behandlungsmedium mit diesem über das Regelsystem 28 beaufschlagt.

## Patentansprüche

1. Verfahren zum Einbringen eines Behandlungsmediums in Form von Chemikalien in den Abgasstrom bei Verbrennungsprozessen mittels eines Trägermediums durch eine Zerstäubungsdüse zur Verminderung der Stickoxidkonzentration, wobei das Einbringen in den Feuerraum in mindestens zwei übereinander liegenden Ebenen erfolgt, in denen Zerstäubungsdüsen angeordnet sind, die wahlweise abwechselnd oder gemeinsam mit dem Behandlungsmedium beaufschlagt werden, **dadurch gekennzeichnet,** daß bei Vorhandensein einer Flamme in einer oder mehreren Düsenebenen die jeweilege Düsenebene vollständig von der Zufuhr von Behandlungsmedium abgeschaltet wird, sodaß das Umschalten von einer Düsenebene auf die nächste Düsenebene in Abhängigkeit vom Vorhandensein einer Flamme im Bereich der jeweiligen Düsenebene erfolgt.

2. Verfahren nach Anspruch 1, **dadurch gekennzeichnet,** daß zur Überwachung der Flamme Flammendetektoren, insbesondere optische Pyrometer, Thermographiekameras, Videokameras, Fotozellen usw. eingesetzt werden.

## Claims

1. Method of supplying a treating agent in the form of chemicals into the exhaust gas stream in combustion processes by means of a carrier medium through a spray nozzle in order to reduce the nitrogen oxide concentration, supply into the combustion chamber being effected in at least two planes situated one above the other in which spray nozzles are arranged, to which the treating agent can be admitted either alternately or together, characterised in that, if a flame is present in one or more nozzle planes, the respective nozzle plane is completely cut off from the supply of treating agent, so that switching from one nozzle plane to the next nozzle plane is effected as a function of the presence of a flame in the region of the respective nozzle plane.

2. Method according to claim 1, characterised in that flame detectors, especially optical pyrometers, thermographic cameras, video cameras, photocells, etc., are used to monitor the flame.

## Revendications

1. Procédé destiné à l'introduction d'un milieu de traitement sous forme de produits chimiques dans le flux des effluents gazeux de processus de combustion au moyen d'un milieu support injecté par une buse de pulvérisation, et ce afin de réduire la concentration en oxydes d'azote, étant précisé que l'injection dans le foyer est effectuée dans au moins deux plans superposés dans lesquels sont disposées des buses de pulvérisation qui peuvent, au choix, être alimentées alternativement ou ensemble en milieu de traitement, caractérisé en ce que, lors de la présence d'une flamme dans un ou plusieurs plans de buses, l'alimentation en milieu de traitement du plan de buses respectif est totalement coupée, de telle façon que la commutation d'un plan de buses au plan de buses suivant est effectuée en fonction de la présence d'une flamme dans la zone du plan de buses respectif.

2. Procédé selon la revendication 1, caractérisé en ce que, pour la surveillance de la flamme, il est utilisé des détecteurs de flamme, en particulier des pyromètres optiques, des caméras thermographiques, des caméras vidéo, des cellules photo-électriques, etc.
